# EUROPEAN PATENT SPECIFICATION

(11) **EP 2 794 358 B1**
(45) Date of publication and mention of the grant of the patent: **28.02.2018**
(21) Application number: 11878100.4
(22) Date of filing: 19.12.2011
(51) Int. Cl.: B60R 19/56

(54) **IMPACT BEAM FOR AN UNDERRUN PROTECTION ARRANGEMENT**
AUFPRALLTRÄGER FÜR EINE UNTERFAHRSCHUTZANORDNUNG
BARRE ANTICHOCS POUR UN AGENCEMENT DE PROTECTION CONTRE L'ENCASTREMENT

(43) Date of publication of application: 29.10.2014
(73) Proprietor: Volvo Lastvagnar AB, 405 08 Göteborg (SE)
(72) Inventor: RYDÉN, Jörgen, 417 46 Göteborg (SE)
(74) Representative: Volvo Technology Corporation
(86) International application number: PCT/SE2011/000234
(87) International publication number: WO 2013/095201

(56) References cited:
- WO-A1-00/12357
- WO-A1-98/41423
- WO-A1-98/41423
- WO-A1-2004/054849
- WO-A1-2004/054849
- DE-A1-102008 039 513
- JP-A- 2009 120 095
- JP-A- 2009 120 095
- US-A- 5 407 239

## Description

### TECHNICAL FIELD

The present invention relates to an underrun protection arrangement according to the preamble of claim 1.

The primary application of the invention is in heavier trucks, especially in order to prevent a passenger vehicle running in under the truck in the event of a head-on collision between the truck and the passenger vehicle.

### BACKGROUND ART

Larger motor vehicles, such as trucks, are nowadays designed with relatively high ground clearance. A principal reason for this lies in the need to be able to use the vehicle when driving on uneven surfaces, for example.

The fact that a truck normally has a relatively high ground clearance, however, constitutes a risk in terms of road safety. This is due to the fact that in a possible head-on collision between a truck and a passenger car there is a risk that the front section of the passenger car will run in under the front of the truck and thus become wedged fast between the roadway and the underside of the front of the truck. This can lead to the front of the truck penetrating the passenger compartment of the passenger car with great force, which can in turn result in serious injuries to the occupants of the vehicle.

A solution to this problem is to provide the truck with a special front underrun protection in the form of a reinforced structure such as a force-absorbing beam element which is arranged horizontally at the front of the truck. This beam element is more specifically arranged in a position corresponding to an anticipated stress from a force in the event of a collision with a passenger car. Such a beam element can serve to prevent the passenger car running in under the front of the truck.

Regulation No 93 of the Economic Commission for Europe of the United Nations relates to the approval of front underrun protective devices (FUP) for heavy vehicles, for example trucks. In order to fulfil the regulation, the lower edge of the FUP cannot be positioned above a maximum ground clearance of 400 mm.

Heavy vehicles are manufactured in various designs depending on the range of application in which the vehicle is to be used. This means that vehicles having the same frame and cab design may be built with different ground clearances, for example by variations in suspension geometry and wheel dimensions.

To provide an effective underrun protection complying with above mentioned ECE R93, the FUP arrangement must be vertically adapted to the frame height of the vehicle. In order to ensure that common components can be used for vehicles with different frame heights, a lower transverse impact beam element can be added to an upper transverse beam to adapt the FUP ground clearance to fulfil the regulations.

It is a fact that the connection between the FUP and lower transverse impact beam must be very strong, since it is exposed to very large forces in the event of a collision.

WO 04/054849 describes an underrun protection arrangement according to the preamble of claim 1.

### DISCLOSURE OF INVENTION

One object of the invention is to create an underrun protection arrangement including an impact beam which makes it possible to provide adjustable ground clearance with an ability to withstand large impact forces.

This object is achieved by an underrun protection arrangement according to claim 1.

The impact beam makes it possible to ensure that the lower edge of the impact element is located in a sufficiently low position to form an effective underrun protection for a passenger car. For this purpose, the lower edge of the lower beam must be located no higher than 400 mm above the ground when the underrun protection arrangement has been fitted to a vehicle. The impact beam may be manufactured in various designs with different heights, and the correct position of the lower edge of the underrun protection is achievable through the deployment of a single impact beam or of a certain combination of impact beams.

According to an example, the impact beam is provided with support surfaces arranged in three dimensions adapted to cooperate with corresponding three dimensional surfaces on the vehicle in a rigid form lock. Once the impact beam has been correctly mounted to the FUP, the three dimensional form lock contact surfaces will provide support in the lateral plane to resist an impact force. According to an example, the support surfaces extend along the full length of the impact beam, e.g. by forming a longitudinal ridge. This enables the impact beam to be manufactured at low cost, e.g. by extrusion of aluminium alloy, by hydraulic or roll forming of steel sheet.

According to an example, the ridge is positioned at a distance from an edge of the beam, distal from an impact force when the beam is mounted on a vehicle. This embodiment provides further support in the lateral plane to resist an impact force.

According to a further example, the ridge is provided on one side of the beam and a corresponding channel on the opposite side of the beam. This embodiment makes it possible to use two or more impact beams in a piggyback configuration to adapt FUP ground clearance.

According to another example, both ends of the beam can be curved with a radius. This embodiment provides even more positive form lock to resist an impact force. According to an example, the impact beam is adapted for use in an underrun protection arrangement for a heavy vehicle.

Advantageously, the height above ground of the underrun protection arrangement can be adjusted by adding a second extension beam below a first extension beam in rigid form lock.

### BRIEF DESCRIPTION OF DRAWINGS

The invention will be explained in more detail below with reference to a preferred example of an embodiment and to the drawings attached, in which:
Fig. 1 shows a schematic side view of a heavy truck with a FUP arrangement in accordance with the invention, in front of a passenger car,
Fig. 2 is a perspective view from below showing the left side of the FUP,
Fig. 3 is a schematic vertical section along line III-III of Fig. 2, and
Fig. 4 is a partly exploded view of a FUP impact beam arrangement.

### MODES FOR CARRYING OUT THE INVENTION

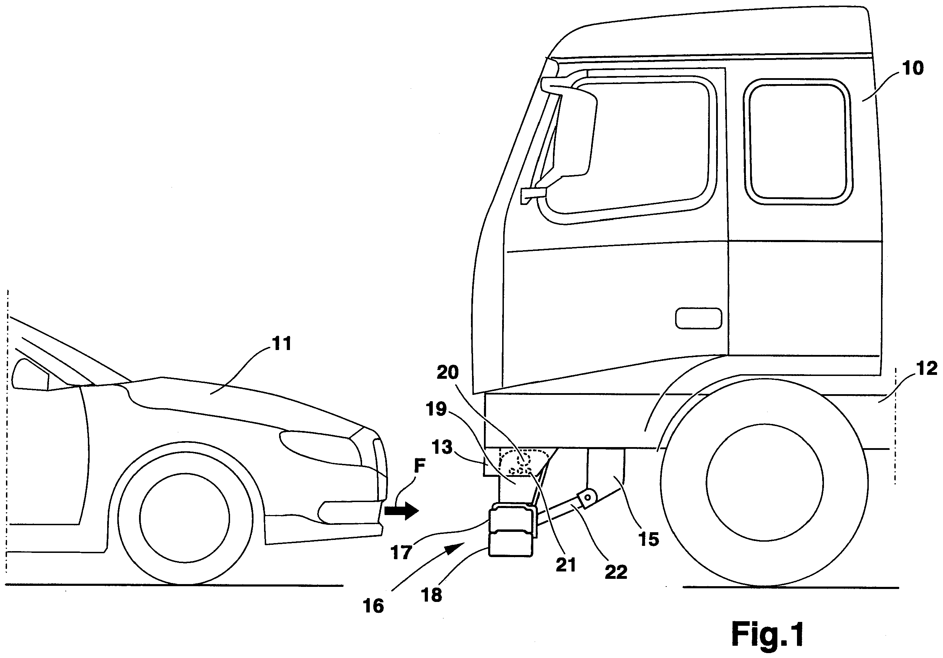

The invention relates to a front underrun protection (FUP) arrangement which is particularly but not exclusively intended for trucks with a relatively high ground clearance. Fig. 1 is a somewhat simplified side view showing a truck 10, which is provided with an arrangement according to the invention. The figure also shows a passenger car 11. The FUP is designed to prevent the passenger car from becoming wedged between the truck and the roadway, which could lead to serious injuries to occupants of the passenger car 11. The FUP arrangement shown in Fig. 1 essentially corresponds with the FUP arrangement described in WO 02/081264.

The truck 10 is of conventional construction having a frame which in turn comprises two longitudinal frame members, of which only one frame member 12 can be seen from Fig. 1. Each frame member 12 essentially extends in the longitudinal direction of the truck 10, up to the front section thereof. The FUP arrangement comprises two front brackets 13 fixed to the front part of the respective frame member 12. However, only one of these two front brackets 13 can be seen from the figure.

Two further rear brackets 15 are firmly connected to a part of the respective frame member 12, which is situated behind the aforementioned front brackets 13. Only one of the two rear brackets 15 can be seen from Fig. 1.

The FUP comprises an impact element 16 in the form of an upper transverse beam 17 extending essentially horizontally and transversely to the longitudinal direction of the vehicle 10. In order to ensure that the FUP has a lower edge situated at or below the maximum height above the ground, a lower transverse impact beam 18 has been fitted in connection with the upper transverse beam 17. The upper transverse beam 17 and the lower impact element 18 are connected to the frame 12 of the vehicle by way of a link element 19.

According to prior art the FUP is designed to absorb energy in case of an impact force exceeding a certain level. For this purpose, the link element 19 is pivotally hinged in a bearing shaft 20 which runs through the respective front bracket 13. However, in normal driving with the truck 1, for example, any pivoting movement of the impact element and the link elements 19 is prevented in that the link elements 19 are locked in relation to the respective front bracket 13 by way of locking elements in the form of strong shear bolts 21.

The impact element 16 is furthermore connected to each rear bracket 15 by way of energy-absorbing connecting elements in the form of two tubes or bars 22, which are longitudinally compressible. However, only one tube 22 can be seen from Fig. 1.

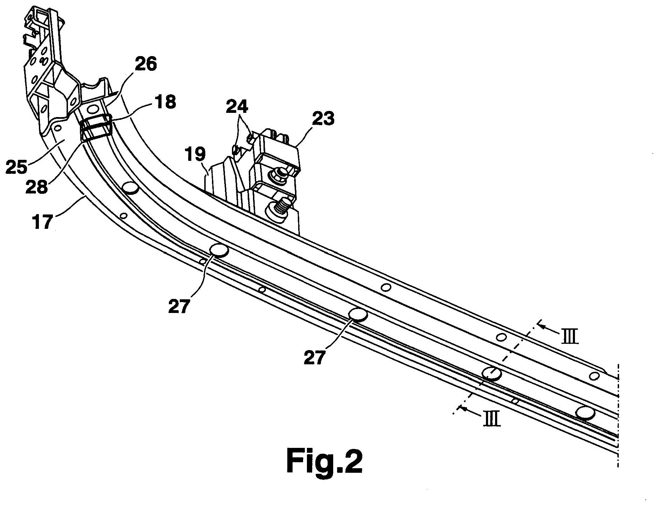

Fig. 2 shows the left half of the FUP in a perspective view at an angle from below and rear. The upper transverse beam 17 is curved at ends, which are provided with corner posts for attachment of front panels (not shown in the drawings). In this embodiment the front brackets 13 and the rear brackets are combined into one compact FUP attachment element 23. The FUP attachment element 23 is provided with a multitude of frame attachment points 24, all of which are not shown in the drawing. The link element 19 links the upper transverse beam 17 to the hinge bearing 20 (not shown in Fig. 2).

The generally horizontal bottom surface 25 of the upper transverse beam 17 is provided with a substantially vertically extending forward facing surface 26 with ends curved to follow the shape of the upper transverse beam 17. The surface 26 and the bottom surface 25 support the lower transverse impact beam 18 which is curved to abut with the surface 26 in form lock fashion. Thus, a horizontal force F in a direction towards the front of the truck and acting on the lower transverse impact beam 18 will be transmitted to the upper transverse beam 17 via the forward facing surface 26.

In the embodiment shown in Fig. 2, a second lower transverse impact beam 28, curved in the same manner as the upper transverse beam 17, has been mounted below the first impact beam 18 in such a manner that the first impact beam is clamped between the second lower impact beam 28 and the upper transverse beam 17. A series of bolts 29 are used to attach the two impact beams 18, 28 to the bottom of the upper transverse beam 17.

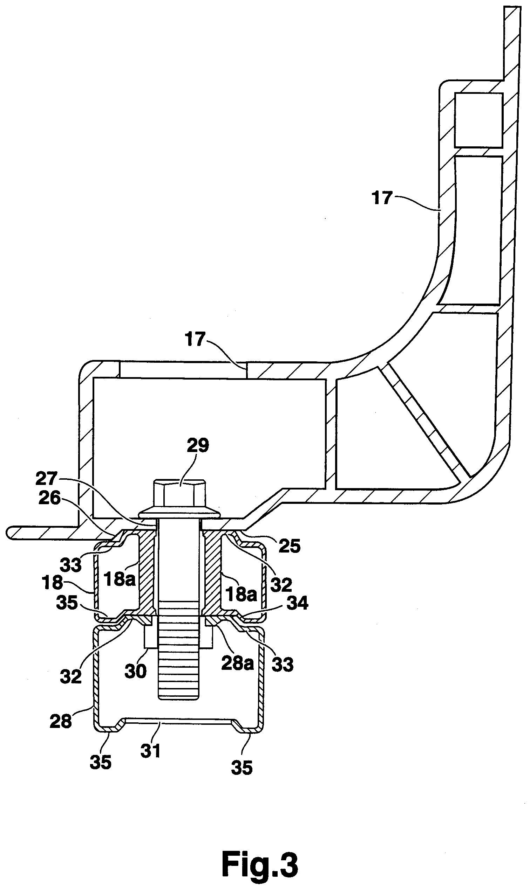

Fig. 3 is a section along line III-III of Fig. 2, showing the upper transverse beam 17 as a double walled structure with the forward facing surface 26. The first and second impact beams 18, 28 are clamped to the upper transverse beam 17 by means of the bolt 29 which has been inserted through an opening 17a in the upper transverse beam 17 and locked by a nut 30 inserted through an opening 31 in the second impact beam 28. The opening 17a is large enough to allow a bolt head tool to reach and tighten the bolt 29 and the opening 31 is large enough for a nut tool to reach and tighten the nut 30 while the impact beams 18, 28 are attached to the upper transverse beam 17.

For the purpose of resisting the nut and bolt clamping force, the first lower transverse impact beam 18 is provided with internal vertical longitudinal walls 18a adjacent a hole 27 through the first impact beam 18 for the bolt 29. For the purpose of transmitting clamping force from the nut to the walls 18a of the upper impact beam 18, the lower impact beam 28 is provided with a bearing surface 28a for the nut 30.

Both impact beams 18, 28 are provided with a longitudinal ridge portion 32 reaching up above edge portions 33 at the respective side of the ridge portion 32. As shown in Fig. 3, the ridge portion 32 abuts the forward facing surface 26 of the upper transverse beam 17. Also, both impact beams 18, 28 are provided with a correspondingly shaped longitudinal channel 34 with edge portions 35 at the opposite side, i.e. at the bottom of the beams. The ridge portion 32 is designed to fit in a form lock fashion into the channel 34, so that the entire bolted structure of upper transverse beam 17 together with the two impact beams form a rigid unit able to transmit the force of a collision to the FUP arrangement. The edge portions 32, 35 are shaped with radiuses to maximize rigidity.

The first impact beam 18 can for example be manufactured as an extruded profile with three longitudinal internal partitions formed by the longitudinal walls 18a. The extruded profile is drilled to accept the attachment bolts 29 and also shape pressed at the ends to confirm with the shape of the channel 25 in the upper transverse beam 17. Alternatively, the impact beams can be produced in steel by hydraulic forming or by roll forming.

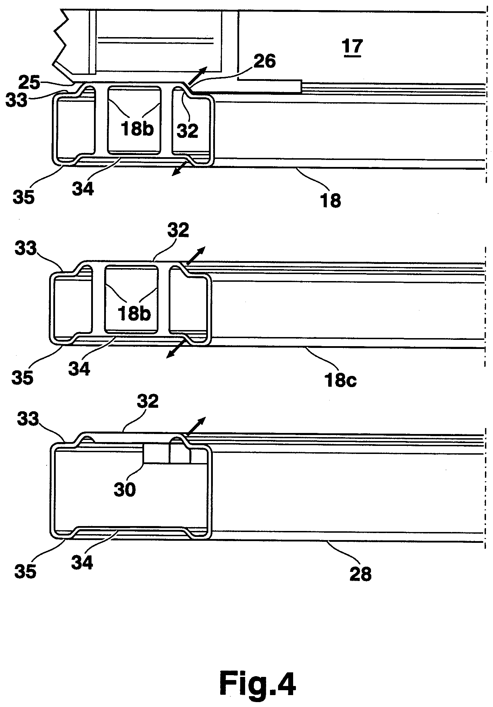

Fig. 4 illustrates how the ground clearance of the FUP arrangement can be adjusted in a secure functional manner by adding a third impact beam 18c between the first impact beam 18 and the second impact beam 28 in piggyback manner. For this purpose, the first and the third impact beams 18, 18c are identical with vertical inner walls 18a to resist the clamping force. To reduce weight, the second impact beam 28 is tubular without any inner walls. When only a single impact beam is required for fulfilling the maximum FUP ground clearance, the impact beam 28 is used with relatively short bolts 29 to secure the beam to the upper transverse beam 17. When one or two additional beams are needed to reach the maximum FUP ground clearance distance, the impact beam 28 is positioned below one or more impact beams 18, 18c using longer bolts 29.

The invention is not limited to the examples of embodiments described above but can be modified within the scope of the following patent claims. For example, the invention can in principle be used in all types of vehicle, such as trucks, loaders and buses, where a relatively high ground clearance is desired.

The invention is therefore not limited to use in conventional trucks. The invention can obviously also be used on underrun protection that is not pivotally fixed to the vehicle frame structure but is instead securely fixed.

## Claims

1. An underrun protection arrangement for a vehicle (10) comprising a frame (12) and an impact beam (18, 18c, 28) arranged in a position corresponding to an anticipated stress from a force (F) in the event of a possible collision with another vehicle (11), wherein the arrangement comprises an upper transverse beam (17) and a lower impact beam (18, 18c, 28) which is fixed to said upper transverse beam by bolts (29) connecting said upper and lower beams via horizontal support surfaces (25), wherein the lower impact beam (18, 18c, 28) is provided with a vertical ridge (32) which extends upwards in rigid form lock against a vertically extending surface (26) on the upper transverse beam (17), **characterized in that** the vertical ridge (32) extends along the full length of lower impact beam (18, 18c, 28).

2. An underrun protection arrangement according to claim 1, **characterized in that** the height above ground of the underrun protection arrangement can be adjusted by adding a second impact beam (18c) below a first impact beam (28) in rigid form lock.

## Patentansprüche

1. Unterfahrschutzanordnung für ein Fahrzeug (10) umfassend einen Rahmen (12) und einen Aufprallträger (18, 18c, 28), der in einer Position angeordnet ist, die einer erwarteten Belastung von einer Kraft (F) im Falle einer möglichen Kollision mit einem anderen Fahrzeug (11) entspricht, wobei die Anordnung einen oberen Querträger (17) und einen unteren Aufprallträger (18, 18c, 28) umfasst, der an dem oberen Querträger durch Bolzen (29) fixiert ist, die den oberen und unteren Träger über horizontale Auflageflächen (25) verbinden, wobei der untere Aufprallträger (18, 18c, 28) mit einer vertikalen Kante (32) versehen ist, die sich in starrem Formschluss gegen eine sich vertikal erstreckende Oberfläche (26) an dem oberen Querträger (17) nach oben erstreckt, **dadurch gekennzeichnet, dass** sich die vertikale Kante (32) entlang der vollen Länge des unteren Aufprallträgers (18, 18c, 28) erstreckt.

2. Unterfahrschutzanordnung nach Anspruch 1, **dadurch gekennzeichnet, dass** die Höhe über Grund der Unterfahrschutzanordnung durch Hinzufügen eines zweiten Aufprallträgers (18c) unter einem ersten Aufprallträger (28) in starrem Formschluss eingestellt werden kann.

## Revendications

1. Agencement anti-encastrement pour un véhicule (10) comprenant un châssis (12) et une poutre pare-chocs (18, 18c, 28) agencée dans une position correspondant à une contrainte anticipée provoquée par une force (F) en cas de possible collision avec un autre véhicule (11), dans lequel l'agencement comprend une poutre transversale supérieure (17) et une poutre pare-chocs inférieure (18, 18c, 28) qui est fixée à ladite poutre transversale supérieure par des boulons (29) reliant lesdites poutres supérieure et inférieure par l'intermédiaire de surfaces de support horizontales (25), dans lequel la poutre pare-chocs inférieure (18, 18c, 28) est pourvue d'une crête verticale (32) qui s'étend vers le haut dans un verrouillage de forme rigide contre une surface s'étendant verticalement (26) sur la poutre transversale supérieure (17), **caractérisé en ce que** la crête verticale (32) s'étend sur toute la longueur de la poutre pare-chocs inférieure (18, 18c, 28).

2. Agencement anti-encastrement selon la revendication 1, **caractérisé en ce que** la hauteur au-dessus du sol de l'agencement anti-encastrement peut être ajustée en ajoutant une deuxième poutre pare-chocs (18c) sous une première poutre pare-chocs (28) dans un verrouillage de forme rigide.
